# EUROPEAN PATENT APPLICATION

(11) **EP 1 911 567 A1**
(43) Date of publication of application: **16.04.2008**
(21) Application number: 06425695.1
(22) Date of filing: 09.10.2006
(51) Int. Cl.: B29C 65/74, B65B 51/30, B26D 3/08

(54) **Continuous transverse welding assembly for flow-pack packaging machines**

(71) Applicant: CAVANNA S.p.A., I-28077 Prato Sesia Novara (IT)
(72) Inventor: Guidetti, Dario, 28077 Prato Sesia (Novara) (IT)
(74) Representative: Marchitelli, Mauro

(57) **Abstract**

Transverse-welding assembly (20) for flow-pack packaging machines, comprising two counter-rotating shafts (22, 24), which can turn about respective axes (26, 28) parallel to one another, each of which carries at least one welding jaw (76, 78), the welding jaws (76, 78) being provided with respective welding portions (80, 82) and, respectively, a cutting blade (84) and a counterblade (86), the jaws (76, 78) cooperating with one another for executing simultaneously welding and cutting of successive portions of packaging material. The axis of rotation (28) of one of said shafts (24) can be displaced with respect to the axis of rotation (26) of the other shaft (22) between a first operating position and a second operating position. In the first operating position, the blade (84) and the counterblade (86) effect an incision (16) of the packaging material, without complete cutting so as to form a line of preferential failure (16) and in the second operating position the blade (84) and the counterblade (86) carry out complete cutting of the packaging material.

## Description

The present invention relates to a transverse-welding assembly for flow-pack packaging machines.

In flow-pack packaging machines, an initially plane film of packaging material is shaped to form a tubular configuration, within which products to be packaged are inserted, set at a distance from one another in a longitudinal direction. The film of packaging material is closed by a continuous longitudinal weld and by two transverse welds on opposite sides with respect to the product contained in the wrapper.

In conventional flow-pack packaging machines, the assembly that carries out transverse welding of the film of packaging material simultaneously also carries out transverse cutting of the film so as to produce individual packages, each of which is closed by a longitudinal weld and by two transverse welds. The transverse-welding assembly normally carries out cutting between two adjacent welding portions of the film of packaging material. The welding portion upstream of the cut constitutes the rear closing of a first product, and the weld immediately downstream of the cut constitutes the front weld of a second product immediately following the first.

In some cases, there is the need to form arrays of a pre-set number of products, in which each product is packaged individually and in which the products of each array are joined in series to one another by means of lines of preferential failure. The individual products of each array can be separated from the remaining products of the array by performing a tear along the lines of preferential failure.

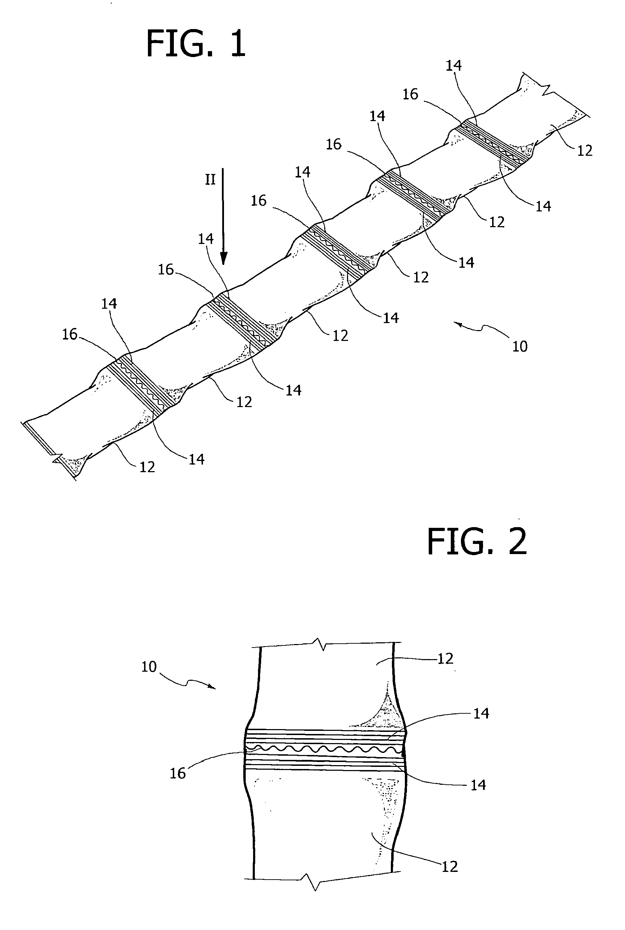

The arrays of products of this type are normally referred to as "chaplets". An example of said products is illustrated in Figures 1 and 2 of the attached plates of drawings. With reference to said figures, number 10 designates an array formed by a pre-set number of products 12 packaged individually by means of longitudinal and transverse welds. The lines of transverse welding are designated by 14. Between each pair of adjacent products 12 belonging to one and the same array 10 a line of preferential failure 16 is provided, which is obtained from an incomplete cutting of the packaging material in the area comprised between two adjacent transverse welds 14 belonging to two consecutive products.

In the traditional solutions, in order to produce packages of the "chaplet" type, the transverse-welding assembly is equipped with a plurality of welding jaws, some of which are provided for carrying out complete cutting of the sheet of packaging material, and the remaining ones are provided for carrying out an incision without cutting right through the packaging material so as to form the lines of preferential failure 16.

The main drawback of this solution is that it is necessary to replace the welding jaws in order to vary the number of products forming each array or "chaplet". A further drawback of known solutions is represented by the fact that the number of the products forming each array is limited by the maximum number of welding jaws with which the transverse-welding assembly can be provided. Usually, the total number of welding jaws, and consequently of pieces in each array, is limited to just a few units.

The purpose of the present invention is to provide a transverse-welding assembly for flow-pack packaging machines that will enable the drawbacks of the prior art to be overcome.

According to the present invention, the above purpose is achieved by a transverse-welding assembly having the characteristics forming the subject of Claim 1.

The present invention will now be described in detail with reference to the attached drawings, which are provided purely by way of non-limiting example, and in which:
- Figures 1 and 2, already described previously, illustrate as a whole an array of products joined to one another by lines of preferential failure and a detail of the area indicated by the arrow II in Figure 1;
- Figure 3 is a perspective view of a transverse-welding assembly according to the present invention;
- Figure 4 is a front view according to the arrow IV of Figure 3;
- Figure 5 is a side view according to the arrow V of Figure 4;
- Figure 6 is a partial cross section at an enlarged scale according to the arrow VI-VI of Figure 4; and
- Figure 7 is a cross section according to the line VII-VII of Figure 4.

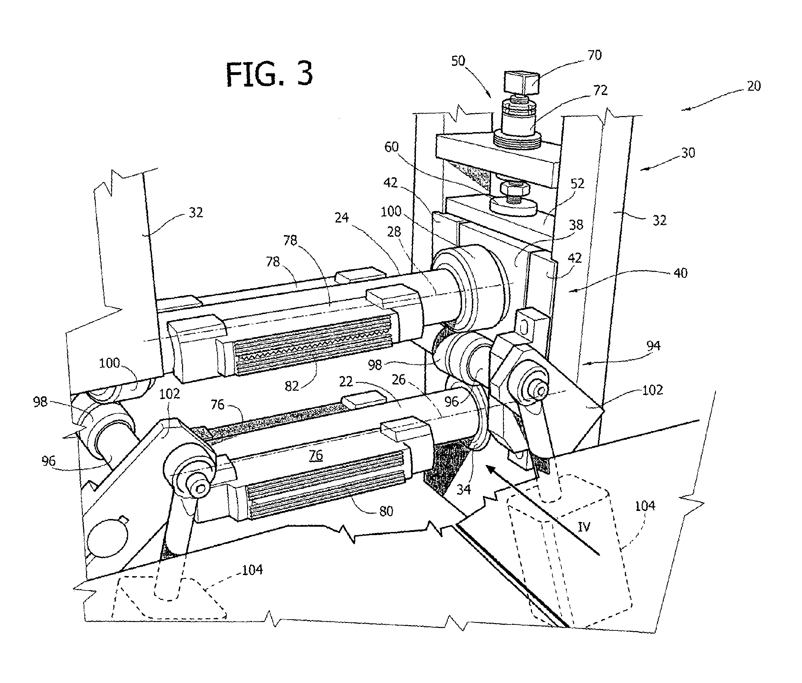

Designated by 20 in Figures 3 to 5 is a transverse-welding assembly for a flow-pack packaging machine, designed to form arrays of products of the "chaplet" type illustrated in Figures 1 and 2. The welding assembly 20 comprises two counter-rotating parallel shafts 22, 24, which can turn about respective horizontal axes 26, 28. As will be described in detail in what follows, the axis of rotation of one of the two shafts 22, 24 is fixed, and the axis of rotation of the other shaft can be displaced upon command with respect to the fixed axis. In the example illustrated in the figures, the bottom shaft 22 is able to rotate about a fixed axis 26, and the top shaft 24 is able to rotate about a mobile axis 28. Of course, this arrangement could be reversed, i.e., with the axis of the top shaft 24 fixed and the axis of the bottom shaft 22 mobile. The shafts 22, 24 are carried by a fixed supporting structure 30, which comprises two parallel uprights 32 that extend in a vertical direction.

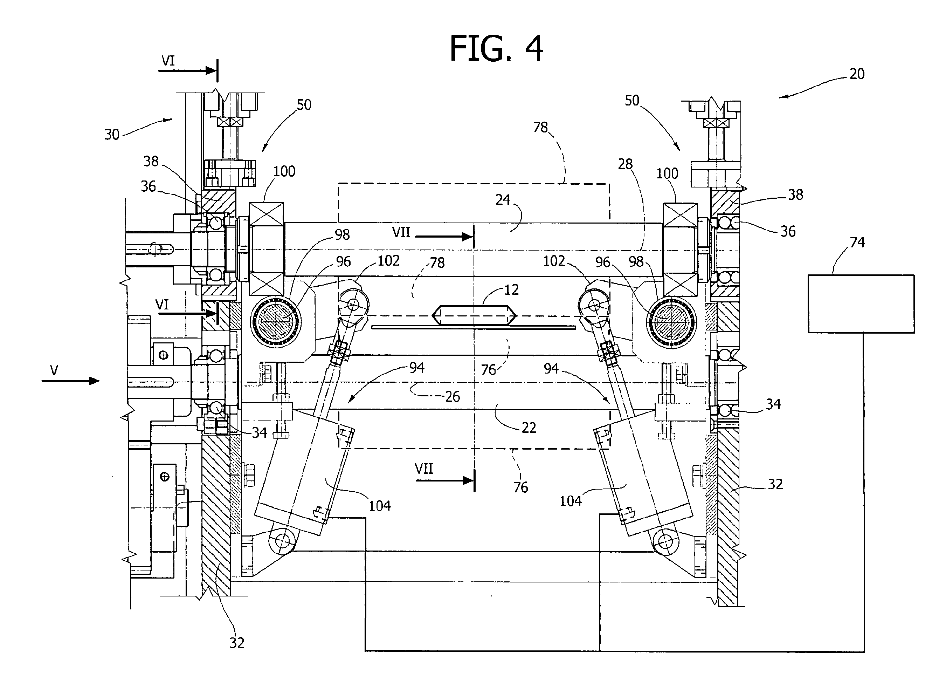

As may be seen in particular in Figure 4, the bottom shaft 22 is supported by two rolling bearings 34, which define the fixed axis of rotation 26. The outer rings of the rolling bearings 34 are fixed with respect to the corresponding uprights 32.

With reference to Figures 4, 5 and 6, the top shaft 24 is supported in rotation about the axis 28 by means of two rolling bearings 36. The outer rings of the rolling bearings 36 are carried by respective plates 38.

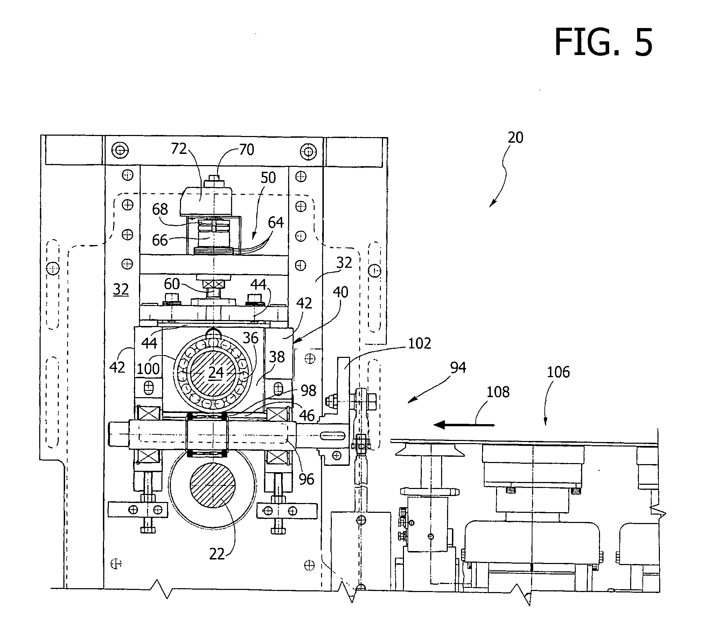

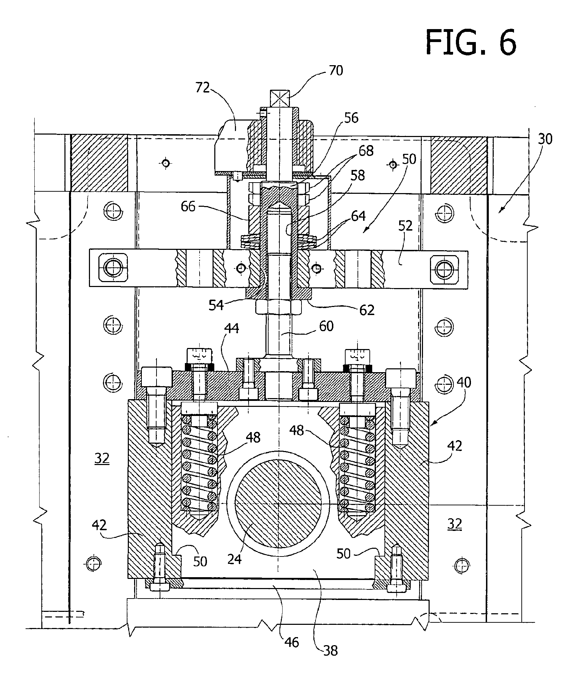

With reference in particular to Figures 5 and 6, each plate 38 is carried by an adjustable frame 40. Each plate 38 is mobile with respect to the frame 40 in a direction orthogonal with respect to the axis of rotation of the shaft 24.

With reference to Figures 5 and 6, the adjustable frame 40 comprises two side elements 42, a top cross member 44, and a bottom cross member. The plate 38 carrying the bearing 36 engages in a slide-guide relationship the side elements 42 of the adjustable frame 40. Elastic compression means, constituted, for example, by two helical compression springs 48, push the plate 38 downwards, so that it bears upon arrest surfaces 50 (Figure 6). The compression springs 48 are set between the plate 38 and the top cross member 44 of the adjustable frame 40. Each plate 38 is hence mobile with respect to the adjustable frame 40 against the action of the springs 48 in a direction orthogonal with respect to the axis of rotation 28 of the top shaft 24. The simultaneous displacement of the two plates 38 entails a displacement of the axis of rotation 28 in a direction parallel to itself.

The two adjustable frames 40 are both provided with a movement of adjustment in a vertical direction with respect to the fixed uprights 32. With reference to Figures 4, 5 and 6 each mobile frame 40 is associated to an adjustment device 50, which controls a movement of adjustment of the mobile frame 40 in a direction orthogonal to the axis of rotation 28 of the top shaft 24. With reference in particular to Figure 6, the adjustment device 50 comprises a cross member 52 fixed to the upright 32. The cross member 52 has a hole 54, in which an adjustment bushing 56 is engaged in such a way that it is free to rotate. The adjustment bushing 56 has a threaded hole 58, engaged in which is a screw 60 fixed to the top cross member 44 of the adjustable frame 40. The adjustment bushing 56 has a head 62 that rests against the bottom surface of the fixed cross member 52. Two Belleville springs 64 are set coaxially on the outside of the adjustment bushing 56 and keep the head 62 of the adjustment bushing 56 in contact with the bottom surface of the cross member 52. The Belleville washers 64 act against a spacer 66, which is kept in a fixed position with respect to the adjustment bushing 56 by two ring nuts 68, which engage an external thread of the adjustment bushing 56. The adjustment bushing 56 has an actuation portion 70, which can be operated using a spanner for setting the adjustment bushing 56 in rotation about its own longitudinal axis. The adjustment bushing 56 is associated to a stationary indicator device 72, which is fixed with respect to the cross member 52 and has a graduated scale (not illustrated), which indicates the angular position of the adjustment bushing 56, which, in turn, corresponds uniquely to the position of the adjustable frame 40 with respect to the uprights 32.

The device 50 enables adjustment of the position of the mobile frame 40 with respect to the upright 32 and, consequently, enables variation of the distance between the axes of rotation 26, 28 of the shafts 22, 24.

The two shafts 22, 24 are driven in rotation by means of an electric motor (not illustrated). Preferably, the two shafts 22, 24 mesh with one another by means of a gear transmission that causes the two shafts to rotate in directions opposite to one another at the same speed. The two shafts 22, 24 are preferably associated to respective encoders or similar detectors of angular position. The electric motor that controls rotation of the shafts 22, 24 is controlled by an electronic control unit, designated as a whole by 74 in Figure 4.

With reference to Figures 3 and 4, the two shafts 22, 24 carry respective welding jaws 76, 78. Each shaft 22, 24 can be provided with one or more jaws. The number of jaws may vary according to the applications. In the example illustrated in the figures, each shaft 22, 24 carries two welding jaws 76, 78 set at 180° with respect to one another. Each jaw 76, 78 has a respective welding portion 80, 82, which co-operates with the welding portion of the opposed jaw for carrying out transverse welding of the film of packaging material.

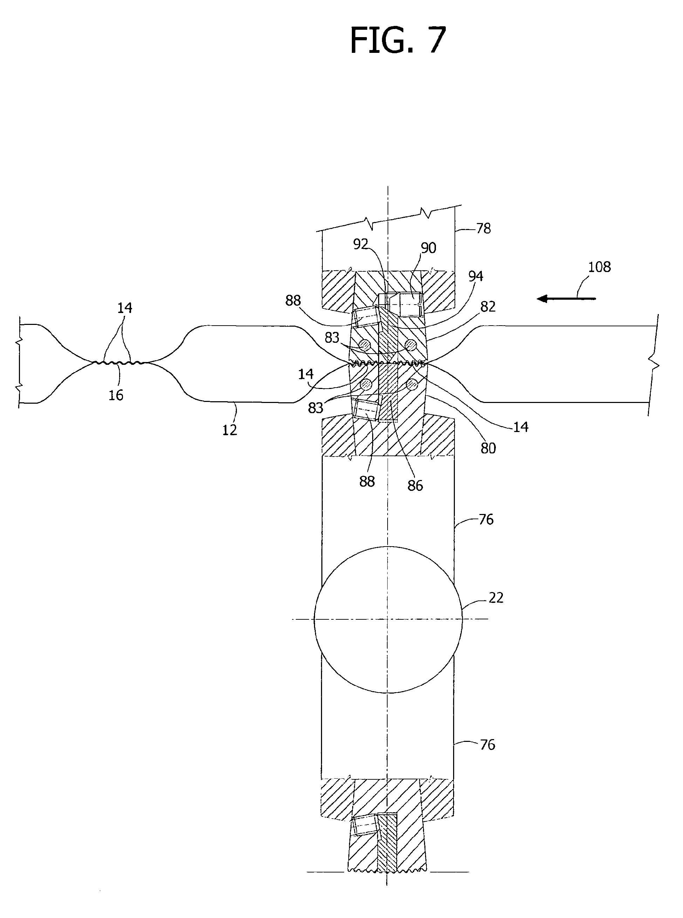

As illustrated in particular in Figure 7, the welding portions 80, 82 preferably have respective active surfaces with undulated profiles that penetrate one another in the welding step. The welding portions 80, 82 are provided with respective electric resistance heaters 83. The temperature of the welding portions can be detected by means of a probe (not illustrated). The welding portions 80, 82 are moreover provided, in respective central areas, with a blade 84 and a counterblade 86, which co-operate with one another for executing cutting of the material of the packaging in an area comprised between two adjacent welded portions 14. The blade 84 and the counterblade 86 are housed within respective seats of the welding portions 80, 82 and are fixed within said seats by means of setscrews 88. The blade 84, or the counterblade 86, or both of them, is/are adjustable in a direction orthogonal with respect to the axis of rotation of the corresponding shaft, for example by means of a screw with an end shaped like a truncated cone 90 that co-operates with an inclined surface 92 of the blade 84 or of the counterblade 86. Alternatively, the adjustment could be performed by means of calibrated shims.

The adjustment device 50 described previously enables adjustment of the mutual penetration between the undulated profiles of the welding portions 80, 82 to obtain the heat-sealing of the sheet of packaging material. The adjustment of the position of the blade 84 or of the counterblade 86 with respect to the corresponding welding portions 80, 82 enables regulation of the interference between the blade and the counterblade 86 so as to obtain cutting of the packaging material. Said adjustments are performed during setting-up of the machine, and it may be necessary to carry out the adjustments again only as the characteristics of the sheet of packaging material used vary.

The adjustment of the interference between the blade 84 and the counterblade 86 is set so as to obtain through cutting of the sheet of packaging material.

With reference to Figures 3, 4 and 5, the welding assembly 20 according to the present invention is provided with an actuator device 94, operating under the control of the electronic control unit 74, which enables displacement of the axis of rotation 28 of the top shaft 24 between a first operating position and a second operating position. The two operating positions are set in such a way that, in the first operating position, the blades and counterblades 84, 86 of the jaws 76, 78 effect an incision of the packaging material without complete cutting of the packaging material so as to form lines of preferential failure 16, and, in the second operating position, the blades 84 and the counterblades 86 effect complete cutting of the packaging material. In both of the operating positions, the welding portions 80, 82 of the welding jaws 76, 78 carry out welding of the packaging material. This is possible in view of the fact that the distance between the two operating positions is only a few hundredths of millimetre. The fact that the welding portions 80, 82 are moved away by this amount does not jeopardize the capacity for carrying out welding in both of the operating positions.

An embodiment of the actuator device 94 is illustrated with reference to Figures 3 to 5. In this example of embodiment, the actuator device 94 comprises two eccentric shafts 96, each of which is set in a position corresponding to a respective end of the shaft 24. The shafts 96 extend orthogonal to the shaft 24 and are carried by respective supports fixed to the adjustable frames 40 carrying the mobile shaft 28. In particular, the supports of the eccentric shafts are fixed to the side elements 42 of the frames 40. The shafts 96 are mounted on the respective supports with an eccentricity substantially equal to the amplitude of the displacement of the axis 28 between the first operating position and the second operating position. The two eccentric shafts 96 co-operate with the shaft 24 by means of two pairs of rolling bearings 98, 100, carried, respectively, by the eccentric shaft 96 and by the top shaft 24. The rolling bearings 98, 100 are set with the respective axes of rotation orthogonal to one another and are in contact with one another.

Each eccentric shaft 96 is fixed to a control lever 102 that enables oscillation of the shaft 96 between two angular positions, corresponding, respectively, to the first operating position and the second operating position of the top shaft 24. Movement of the levers 102 is controlled by means of linear actuators 104, each of which has a first end articulated to the fixed structure 30 and a second end articulated to the respective lever 102. The actuators 104, for example of a pneumatic type, are controlled by solenoid valves, controlled, in turn, by the electronic control unit 74.

With reference to Figure 5, set upstream of the transverse-welding assembly 20 is a longitudinal welding unit 106 of the type conventionally used in flow-pack packaging machines. The longitudinal welding unit carries out a continuous longitudinal weld of the sheet of packaging material, after prior bending according to a tubular configuration.

The packaging material bent into a tubular shape, welded in a longitudinal direction and containing the products to be packaged set at a distance from one another is fed to the transverse-welding assembly 20 in the direction indicated by the arrows 108 in Figures 5 and 7. The transverse-welding assembly 20 carries out the transverse welds 14 in the space comprised between each pair of adjacent products.

The top shaft 24 is normally kept in its first operating position, in which it is located at a greater distance from the fixed axis 26. In this condition, the blades 84 and counterblades 86 carry out an incision 16 without through cutting of the packaging material. After a pre-set number of incisions without cutting right through, the electronic control unit 74 controls lowering of the axis of rotation 28 via the actuators 104, in such a way that the blade and counterblade 84, 86 perform a complete cutting of the packaging material. Immediately after performing complete cut, the welding assembly returns to the first position, in which it carries out the incision without complete cutting of the material.

This enables production of arrays of products 10, as illustrated in Figure 1, formed by a pre-set number of products 12 packaged individually and joined in series to one another by lines of preferential failure 16.

The number of products within each array can be varied via the electronic control unit 74, without any need for intervention of adjustment on the transverse-welding assembly 20.

The welding assembly according to the present invention can also be used to produce individual packages, with a complete cut for each weld. In this case, the operation would be identical to that of a normal flow-pack packaging machine.

## Claims

1. A transverse-welding assembly (20) for flow-pack packaging machines, comprising two counter-rotating shafts (22, 24), which can turn about respective axes (26, 28) parallel to one another and each of which carries at least one welding jaw (76, 78), the welding jaws (76, 78) being provided with respective welding portions (80, 82) and, respectively, a cutting blade (84) and a counterblade (86), the jaws (76, 78) co-operating with one another for executing simultaneously welding and cutting of successive portions of packaging material,
said transverse-welding assembly being **characterized in that** the axis of rotation (28) of one of said shafts (24) can be displaced with respect to the axis of rotation (26) of the other shaft (22) between a first operating position and a second operating position, in which in the first operating position the blade (84) and the counterblade (86) effect an incision (16) of the packaging material without complete cutting so as to form a line of preferential failure (16) and in which, in the second operating position, the blade (84) and the counterblade (86) effect complete cutting of the packaging material.

2. The welding assembly according to Claim 1, **characterized in that** it comprises an actuator device (94) controlled by an electronic control unit (74), which controls displacement of the axis of rotation (28) from the first operating position to the second operating position, and vice versa, so as to carry out a complete cut after a pre-set number of incisions without complete cutting.

3. The welding assembly according to Claim 2, **characterized in that** the shaft (24) with mobile axis of rotation (28) is carried by bearings (36) supported by mobile plates (38) pushed by elastic means (48) towards said second operating position.

4. The welding assembly according to Claim 3, **characterized in that** said actuator assembly (94) comprises two eccentric shafts (96) co-operating with the shaft (24) with mobile axis (28) for pushing said shaft (24) towards said first operating position against the action of said elastic means (48).

5. The welding assembly according to Claim 4, **characterized in that** said mobile plates (38) are carried by respective frames (40) with adjustable position.

6. The welding assembly according to Claim 1, **characterized in that** said welding portions (80, 82) have respective active portions of undulated shape that penetrate one another in the welding configuration.

7. The welding assembly according to Claim 1, **characterized in that** at least one between said blade (84) and counterblade (86) is adjustable with respect to the corresponding welding portion (80, 82).

8. The welding assembly according to Claim 5, **characterized in that** each of said eccentric shafts (96) is carried by a respective frame (40) with adjustable position.
